(19) Europäisches Patentamt
European Patent Office
Office européen des brevets

(11) **EP 4 738 666 A1**

(12) **EUROPEAN PATENT APPLICATION**

(43) Date of publication:
**06.05.2026 Bulletin 2026/19**

(21) Application number: **25209749.8**

(22) Date of filing: **20.10.2025**

(51) International Patent Classification (IPC):
*H02K 11/21* (2016.01)    *H02K 11/30* (2016.01)
*H02K 7/08* (2006.01)    *H02K 7/116* (2006.01)
*H02K 5/173* (2006.01)    *H02K 11/20* (2016.01)

(52) Cooperative Patent Classification (CPC):
**H02K 7/116; H02K 5/1735; H02K 11/20;**
H02K 11/21

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.10.2024 JP 2024192442**

(71) Applicant: **Sumitomo Heavy Industries, Ltd.
Tokyo 141-6025 (JP)**

(72) Inventors:
• **BOCHMANN, Max
Markt Indersdorf, 85229, (DE)**
• **KEHL, Jan Hendrik
Markt Indersdorf, 85229, (DE)**

(74) Representative: **Louis Pöhlau Lohrentz
Patentanwälte
Postfach 30 55
90014 Nürnberg (DE)**

(54) **ACTUATOR**

(57) Provided is a technique for identifying a lubrication state of a contact unit in an actuator (10) including a motor (14) and a speed reducer. An actuator (10) including a motor (14) and a speed reducer (16), includes: a contact unit (60A to 60F) including a plurality of contact members, in which during an operation of the actuator (10), the contact members adjacent to each other come into contact with each other with relative movement; a plurality of energization members (66A, 66B) provided separately from the contact unit (60A to 60F) and configured to cause an electric current to flow through an energization path (64) configured by a plurality of actuator constituent members via a contact location between the plurality of contact members; and a measurement unit (62) configured to measure a lubrication state between the plurality of contact members in the contact unit (60A to 60F) by causing an electric current to flow through the energization path (64).

FIG. 2

**Description**

BACKGROUND OF THE INVENTION

Field of the Invention

The present disclosure relates to an actuator.

Description of Related Art

Japanese Unexamined Patent Publication No. 2022-142033 discloses an actuator including a motor and a speed reducer. The actuator usually includes a contact unit including a plurality of contact members such as a bearing and a gear set. In the contact unit, during the operation of the actuator, the contact members adjacent to each other can come into contact with each other with relative movement.

SUMMARY OF THE INVENTION

A lubrication state between the contact members of the contact unit during the operation of the actuator affects various elements such as the life of the actuator. Therefore, it is desirable to be able to identify the lubrication state. However, a technique capable of satisfying such a demand has not yet been proposed for the actuator including a motor and a speed reducer.
Therefore, one object of the present disclosure is to provide a technique for identifying a lubrication state of a contact unit in an actuator including a motor and a speed reducer.
An actuator according to the present disclosure is an actuator that includes a motor and a speed reducer, the actuator including: a contact unit including a plurality of contact members, in which during an operation of the actuator, the contact members adjacent to each other come into contact with each other with relative movement; a plurality of energization members provided separately from the contact unit and configured to cause an electric current to flow through an energization path configured to include a plurality of actuator constituent members via a contact location between the plurality of contact members; and a measurement unit configured to measure a lubrication state between the plurality of contact members in the contact unit by causing the electric current to flow through the energization path.
According to the present disclosure, it is possible to identify a lubrication state of a contact unit in an actuator including a motor and a speed reducer.

BRIEF DESCRIPTION OF THE DRAWINGS

    FIG. 1 is a side sectional view showing an actuator according to an embodiment.
    FIG. 2 is an enlarged view of a part of FIG. 1.
    FIG. 3 is a block diagram showing some functions of the actuator according to the embodiment.

DETAILED DESCRIPTION OF THE INVENTION

Hereinafter, an embodiment for implementing an actuator according to the present disclosure will be described. Identical or equivalent elements will be denoted by the same reference numerals and the repeated description thereof will be omitted. In each drawing, for convenience of description, the components are appropriately omitted, enlarged, or reduced. The drawings shall be viewed according to the directions of the reference numerals. In the present specification, the notation of "n-th" (n is a natural number) such as "first" and "second" is used only as a formal description for distinguishing a plurality of elements, and does not have any substantial meaning other than that. For example, the notation of "n-th" does not limit the order of each element. In addition, each element with the notation of "n-th" may be present independently without continuity. For example, it is possible that the "second" element may be present without the "first" element being present.

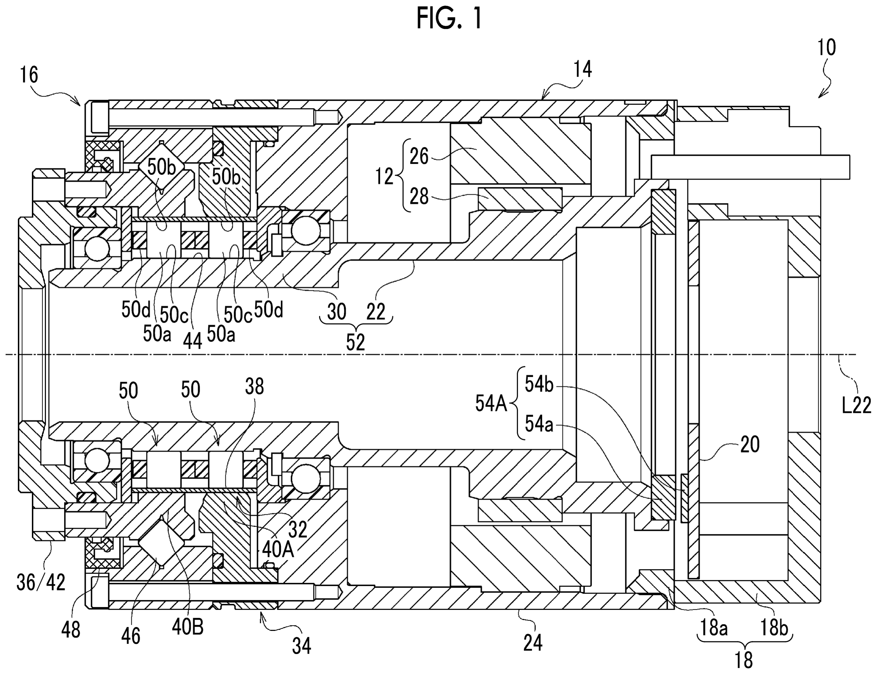

FIG. 1 is referred to. An actuator 10 can drive a driven device (not shown) by outputting rotation. The driven device is, for example, at least a part in various machines such as (1) an industrial machine such as a machine tool or a construction machine, (2) a robot such as an industrial robot or a service robot, (3) a transport machine such as a conveyor, and (4) a vehicle. The actuator 10 is an integral actuator in which a motor casing 24 and a speed reducer casing 34 (described below) are integrated with each other.
The actuator 10 includes a motor 14 having a motor main body 12, and a speed reducer 16 that decelerates the rotation that is output from the motor main body 12. In addition, the actuator 10 includes a counter load-side casing 18 that is disposed on a counter load side with respect to the motor casing 24 of the motor 14, and a circuit board 20 that is fixed to the counter load-side casing 18, as an arbitrary configuration. Hereinafter, a direction along a rotation center line L22 of a motor shaft 22 of the motor 14 will be simply referred to as an axial direction, and a radius direction and a circumferential direction of a circle centered on the rotation center line L22 will be simply referred to as a radial direction and a circumferential direction. In addition, a side (a left side on a paper surface of FIG. 1) toward the speed reducer 16 from the motor 14 in the axial direction will be referred to as a load side, and a side opposite thereto (a right side on the paper surface of FIG. 1) in the axial direction will be referred to as a counter load side.

The motor 14 includes, in addition to the motor main body 12, the motor shaft 22 that is rotated by the motor main body 12, and the motor casing 24 that accommodates the motor main body 12. The motor main body 12 includes a stator 26 and a rotor 28. The stator 26 is disposed on an inner peripheral portion of the motor casing 24, and is fixed to the motor casing 24 by, for example, interference fit, bonding, or the like. The type of the stator 26 is not particularly limited, and may be, for example, a permanent magnet type stator, a winding type stator, a coreless type stator, or the like. The rotor 28 is provided to be rotatable integrally with the motor shaft 22 by, for example, interference fit, bonding, or the like. The type of the rotor 28 is not particularly limited, and may be, for example, a permanent magnet type rotor, a cage type rotor, a winding type rotor, a coreless type rotor, or the like. The motor casing 24 accommodates the motor shaft 22 in addition to the motor main body 12.

The speed reducer 16 includes an input shaft 30 to which the rotation that is output from the motor main body 12 is input, a reduction mechanism 32 that decelerates the rotation of the input shaft 30, the speed reducer casing 34 that accommodates at least a part of the reduction mechanism 32, and a load-side cover 36 that is disposed on a load side with respect to the reduction mechanism 32. The reduction mechanism 32 of the present embodiment is a gear mechanism that includes an external gear 38 and internal gears 40A and 40B, which mesh with each other. The speed reducer 16 of the present embodiment is a bending meshing-type speed reducer having a tubular shape. The reduction mechanism 32 used for this purpose can rotate one (here, the external gear 38) of the external gear 38 and the internal gears 40A and 40B by flexibly deforming the external gear 38 by a wave generator 44 provided in the input shaft 30, and extract an axial rotation component to an output member 42. Since the operating principle of this type of speed reducer is known, the description thereof will be omitted here. In the case of the tubular type, the reduction mechanism 32 has, as the internal gears 40A and 40B, a first internal gear 40A that is disposed on the counter load side and a second internal gear 40B that is disposed on the load side. The output member 42 extracts and outputs the rotation decelerated by the reduction mechanism 32, and then outputs the rotation to the outside. The output member 42 of the present embodiment is configured by the load-side cover 36. In addition, the output member 42 may be configured by the speed reducer casing 34 instead of the load-side cover 36.

The input shaft 30 of the present embodiment is provided to be rotatable integrally with the motor shaft 22. The input shaft 30 of the present embodiment includes the wave generator 44 described above, which causes flexible deformation of the external gear 38. A cross-sectional shape of an outer peripheral portion of the wave generator 44 perpendicular to the axial direction is an elliptical shape. The term "ellipse" as referred to herein is not limited to a geometrically strict ellipse, and also includes a substantially elliptical shape.

The external gear 38 of the present embodiment is a tubular member having flexibility to be flexibly deformed in response to the rotation of the wave generator 44. The internal gears 40A and 40B of the present embodiment are tubular members having stiffness to an extent that the internal gears 40A and 40B are not flexibly deformed in response to the rotation of the wave generator 44. The first internal gear 40A described above meshes with the external teeth of the counter load-side portion of the external gear 38, and the second internal gear 40B meshes with the external teeth of the load-side portion of the external gear 38. The first internal gear 40A has the number of teeth (for example, 102) different from the number of teeth (for example, 100) of the external gear 38, and the second internal gear 40B has the same number of teeth as the number of teeth of the external gear 38.

The speed reducer casing 34 is disposed on the load side with respect to the motor casing 24. The speed reducer casing 34 accommodates the input shaft 30, a load-side cover 36, and the like in addition to at least a part (here, the external gear 38) of the reduction mechanism 32. The speed reducer casing 34 of the present embodiment is configured by a plurality of speed reducer casing members that are connected to each other by bolts or the like. The speed reducer casing 34 of the present embodiment also serves as the first internal gear 40A. In the present embodiment, a main bearing 46 is disposed between the speed reducer casing 34 and the second internal gear 40B, and an oil seal 48 made of a material such as resin having electrical insulation properties is disposed between the speed reducer casing 34 and the second internal gear 40B. The load-side cover 36 is connected to the second internal gear 40B by a bolt or the like.

A wave generator bearing 50 that rotatably supports the external gear 38 is disposed between the wave generator 44 and the external gear 38. In the present embodiment, two wave generator bearings 50 arranged in the axial direction are disposed between the wave generator 44 and the external gear 38. The wave generator bearing 50 of the present embodiment includes a plurality of rolling elements 50a, an outer ring 50b and an inner ring 50c on which the rolling elements 50a roll, and a retainer 50d that holds the plurality of rolling elements 50a. Although an example of the rolling element 50a of the present embodiment is a roller, a specific example thereof is not limited thereto, and various rolling elements such as a sphere may be adopted. The inner peripheral portion of the external gear 38 also serves as the outer ring 50b of the wave generator bearing 50 of the present embodiment. However, a dedicated outer ring 50b may be provided. The outer peripheral portion of the wave generator 44 also serves as the inner ring 50c of the wave generator bearing 50 of the present embodiment. However, a dedicated inner ring 50c may be provided.

The counter load-side casing 18 of the present embodiment includes a ring-shaped first counter load-side casing member 18a that is fixed to a counter load-side end portion of the motor casing 24 by a screw structure or the like, and a second counter load-side casing member 18b that is disposed on the counter load side with respect to the first counter load-side casing member 18a. The second counter load-side casing member 18b is connected to the first counter load-side casing member 18a by a bolt or the like. The circuit board 20 is disposed inside the second counter load-side casing member 18b, and is fixed to the second counter load-side casing member 18b by a screw or the like.

The actuator 10 includes a rotating body 52 that is rotated by the stator 26 and the rotor 28. The rotating body 52 of the present embodiment is configured to include the motor shaft 22 and the input shaft 30.

The actuator 10 includes a first rotation sensor 54A that detects information about the rotation of the rotating body 52. The first rotation sensor 54A of the present embodiment is configured by a rotary encoder, but may be configured by a resolver or the like. The expression "information about rotation" as referred to herein refers to a rotation speed, a phase, a torque, and the like. The first rotation sensor 54A includes a detected portion 54a that is provided to be rotatable integrally with the rotating body 52, and a detection portion 54b that is mounted on the circuit board 20 to face the detected portion 54a. The detected portion 54a is configured by using, for example, a scale such as an optical scale or a magnetic scale. The detection portion 54b is configured by using, for example, an optical sensor, a magnetic sensor, or the like. The detection portion 54b can detect information about the rotation of the rotating body 52 by detecting a change in a predetermined physical quantity (a light amount, a magnetic field, or the like) caused by the rotation of the detected portion 54a.

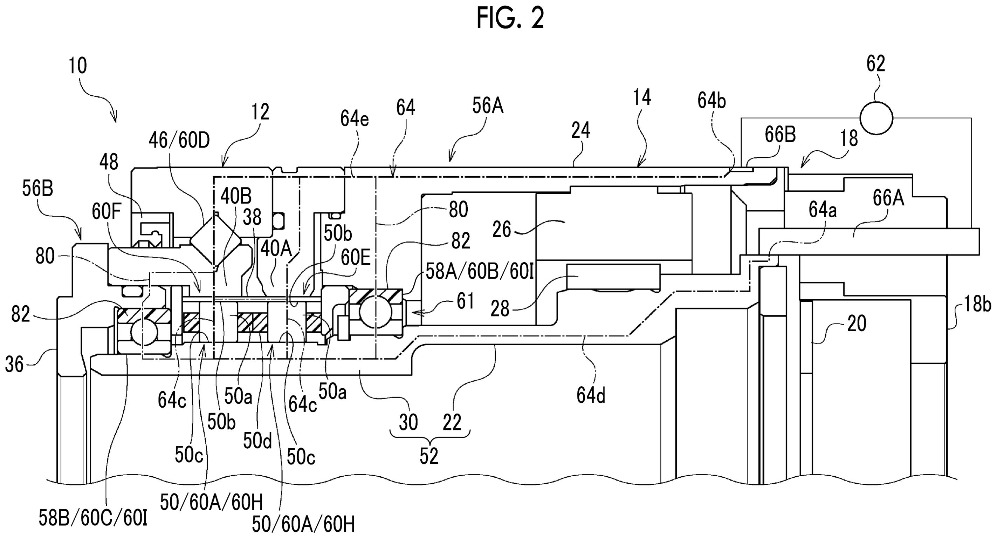

FIG. 2 is referred to. In the drawings, for convenience of description, hatching is omitted for members other than the members having electrical insulation properties. The actuator 10 described above includes relative rotating bodies 56A and 56B that rotate relative to the rotating body 52. The relative rotating bodies 56A and 56B include a first relative rotating body 56A including the motor casing 24, and a second relative rotating body 56B including the load-side cover 36 of the speed reducer 16.

The first relative rotating body 56A of the present embodiment is configured to include the motor casing 24, the speed reducer casing 34, the counter load-side casing 18, the circuit board 20, and the like. The second relative rotating body 56B of the present embodiment is configured to include the load-side cover 36, the second internal gear 40B, and the like. In the present embodiment, the rotating body 52 functions as a high-speed rotating body that rotates at a relatively high speed. In addition, in the present embodiment, the relative rotating body (here, the second relative rotating body 56B) including the output member 42, out of the first relative rotating body 56A and the second relative rotating body 56B, functions as a low-speed rotating body that rotates at a relatively low speed.

The actuator 10 includes a first rotating body bearing 58A that is disposed between the first relative rotating body 56A and the rotating body 52, and a second rotating body bearing 58B that is disposed between the second relative rotating body 56B and the rotating body 52. Each of the rotating body bearings 58A and 58B supports the rotating body 52. In the present embodiment, the first rotating body bearing 58A is disposed between the motor casing 24, which is a part of the first relative rotating body 56A, and the rotating body 52, and the second rotating body bearing 58B is disposed between the load-side cover 36, which is a part of the second relative rotating body 56B, and the rotating body 52.

The actuator 10 includes contact units 60A to 60F each including a plurality of contact members. In the contact units 60A to 60F, during the operation of the actuator 10, the contact members adjacent to each other come into contact with each other with relative movement. This means that the contact members adjacent to each other perform at least one of sliding contact and rolling contact during the operation of the actuator 10.

The contact units 60A to 60F of the present embodiment include the contact units 60A to 60D each of which is configured by a bearing, and the contact units 60E and 60F each of which is configured by a gear set. In the present embodiment, as the contact units each of which is configured by a bearing, a first contact unit 60A that is configured by the wave generator bearing 50, a second contact unit 60B that is configured by the first rotating body bearing 58A, a third contact unit 60C that is configured by the second rotating body bearing 58B, and a fourth contact unit 60D that is configured by the main bearing 46 are included. In the present embodiment, as the contact units 60E and 60F each of which is configured by a gear set, a fifth contact unit 60E including the external gear 38 and the first internal gear 40A, and a sixth contact unit 60F including the external gear 38 and the second internal gear 40B are included.

The contact units 60A to 60D each of which is configured by a bearing include rolling elements, outer rings, and inner rings as the plurality of contact members. In this case, the outer ring and the rolling element adjacent to each other are in contact with each other with relative movement, and the rolling element and the inner ring adjacent to each other are in contact with each other with relative movement. At this time, each of the set of the outer ring and the rolling element and the set of the rolling element and the inner ring mainly performs rolling contact.

The contact units 60E and 60F each of which is configured by a gear set include the external gear 38 and the internal gears 40A and 40B as a plurality of contact members. In this case, the external gear 38 and the internal gears 40A and 40B adjacent to each other are in contact with each other with relative movement. At this time, the external gear 38 and the internal gears 40A and 40B are in contact with each other in a contact mode according to the type of the speed reducer 16. As in the present embodiment, in a case where a bending meshing-type speed reducer is used as the speed reducer 16, the external gear 38 and the internal gears 40A and 40B mainly perform sliding contact.

The actuator 10 is provided with an accommodation space 61 that accommodates a lubricant for lubricating the contact units 60A to 60F. The lubricant is grease, lubricating oil, or the like. The lubricant lubricates the contact locations between the plurality of contact members of the contact units 60A to 60F. The accommodation space 61 may be sealed by a seal member such as the oil seal 48.

The actuator 10 of the present embodiment is characterized in that the actuator 10 includes a measurement unit 62 that measures the lubrication state of at least the contact unit 60A among the contact units 60A to 60F. The measurement unit 62 of the present embodiment measures the lubrication state of the first contact unit 60A. In describing the details, a premise concept will be described first.

The contact location between the contact members adjacent to each other in the contact unit 60A is referred to as a contact area. In the contact area of the contact unit 60A, a portion where the contact members are in direct contact with each other and a portion where the contact members are in contact with each other via a lubricant may be present according to the lubrication state of the contact unit 60A. The lubrication state of the contact unit 60A can be divided into three states, that is, a boundary lubrication state in which the contact members are in direct contact with each other in the entire contact area, a hydrodynamic lubrication state in which the contact members are in contact with each other via an oil film of a lubricant in the entire contact area, and a mixed lubrication state which is an intermediate state between the boundary lubrication state and the hydrodynamic lubrication state. In the mixed lubrication state, both the portion in which the contact members are in direct contact with each other and the portion in which the contact members are in contact with each other via a lubricant are present in the contact area. The lubrication state is the boundary lubrication state when the relative speed between the contact members adjacent to each other is low, and is changed to the mixed lubrication state and the hydrodynamic lubrication state in this order as the relative speed increases.

In the contact area of the contact unit 60A, the portion where the contact members are in contact with each other via the lubricant behaves like a capacitor, and the location where the contact members are in direct contact with each other behaves like an electrical resistance. Here, an oil film thickness of the lubricant and a metal contact ratio $\alpha$ are known as parameters indicating the lubrication state of the contact unit 60A. The oil film thickness refers to the thickness of the lubricant between the contact members adjacent to each other. The metal contact ratio $\alpha$ is a ratio of the area of the direct contact portion between the contact members to the entire contact area between the contact members. In this case, in the portion where the contact members are in contact with each other via the lubricant, the electrical characteristics of the contact unit 60A change depending on the oil film thickness of the lubricant between the contact members, as in the distance between electrodes of a capacitor. In addition, as the metal contact ratio $\alpha$ decreases, the ratio of the portion that behaves as a capacitor increases, and accordingly, the electrical characteristics in the contact area of the contact unit 60A change. That is, the electrical characteristics in the contact area of the contact unit 60A change according to the lubrication state (for example, the oil film thickness and the metal contact ratio $\alpha$) of the contact unit 60A. This means that the lubrication state of the contact unit 60A can be measured by causing an electric current to flow through an energization path 64 via the contact area of the contact unit 60A and measuring a response thereto.

For example, when the oil film thickness in the contact area of the contact unit 60A increases, the electrostatic capacity of the contact unit 60A decreases in accordance therewith, and the magnitude of the impedance of the energization path 64 passing through the contact unit 60A tends to increase. Therefore, the oil film thickness of the contact unit 60A can be measured by applying an alternating current voltage to the energization path 64 passing through the contact area of the contact unit 60A to cause an alternating electric current to flow, and measuring a magnitude Z of the complex impedance of the energization path 64. In addition, in a case of causing an alternating electric current to flow through the energization path 64 passing through the contact area of the contact unit 60A, the contact unit 60A behaves as a capacitor, so that a phase shift occurs between the voltage value and the electric current value of the alternating electric current. The magnitude of the phase shift tends to increase as the metal contact ratio $\alpha$ of the contact unit 60A decreases and the ratio of the location behaving as a capacitor in the contact area increases. Therefore, in a case of causing an alternating electric current to flow through the energization path 64 that passes through the contact area of the contact unit 60A, the metal contact ratio $\alpha$ of the contact unit 60A can be measured by measuring the phase difference of the complex impedance of the energization path 64. The measurement unit 62 of the actuator 10 measures the lubrication state of the contact unit 60A, based on such a concept. Hereinafter, this will be further described in detail.

The actuator 10 is provided with the energization path 64 that is configured by a plurality of actuator constituent members. In FIG. 2, for convenience of description, a location that serves as an example of the energization path 64 is indicated by a one-dot chain line. The actuator constituent member refers to a member that configures the actuator 10. The plurality of actuator constituent members that configure the energization path 64 include at least the first contact unit 60A (the wave generator bearing 50) serving as a measurement target to be measured by the measurement unit 62. In addition to this, the plurality of actuator constituent members of the present embodiment include the external gear 38, the internal gears 40A and 40B, the rotating body 52, the first relative rotating body 56A (the speed reducer casing 34 and the motor casing 24), the second relative rotating body 56B (the second internal gear 40B), the main bearing 46, and the like. The plurality of actuator constituent members that configure the energization path 64 are configured by a conductive material having conductivity. The conductive material is, for example, a metal-based material such as an iron-based material or an aluminum-based material. However, the conductive material is not limited thereto, and may be a resin-based material having conductivity.

The energization path 64 is a path through which an electric current can flow between a first end 64a that is set by a first energization member 66A (described later) and a second end 64b that is set by a second energization member 66B. The first end 64a is an input location or an output location of the electric current by the first energization member 66A, and the second end 64b is an input location or an output location of the electric current by the second energization member 66B. In the present embodiment, the first end 64a is provided in the rotating body 52, and the second end 64b is provided in the first relative rotating body 56A.

The energization path 64 is provided to pass through the contact location between the plurality of contact members of the contact unit 60A serving as a measurement target. In a case where the contact unit 60A serving as a measurement target is a bearing as in the present embodiment, the energization path 64 is provided to pass through, for example, two locations, that is, a contact location between the rolling element 50a and the outer ring 50b and a contact location between the rolling element 50a and the inner ring 50c. The energization path 64 of the present embodiment includes an intermediate path portion 64c that passes through the contact unit 60A serving as a measurement target, a first end-side path portion 64d that is located on the first end 64a side with respect to the intermediate path portion 64c and is connected to the first end 64a, and a second end-side path portion 64e that is located on the second end 64b side with respect to the intermediate path portion 64c and is connected to the second end 64b. The intermediate path portion 64c of the present embodiment is individually provided to correspond to each of two contact units 60A, and the individual intermediate path portions 64c are connected in parallel between the first end-side path portion 64d and the second end-side path portion 64e. The first end-side path portion 64d of the present embodiment is provided to pass through the rotating body 52. The second end-side path portion 64e of the present embodiment passes through the motor casing 24, the speed reducer casing 34, the first internal gear 40A, the second internal gear 40B, and the external gear 38.

The actuator 10 includes the plurality of energization members 66A and 66B for causing an electric current to flow through the energization path 64. The plurality of energization members 66A and 66B are provided separately from the contact unit 60A. The plurality of energization members 66A and 66B include a first energization member 66A and a second energization member 66B. The first energization member 66A is for inputting an electric current to the rotating body 52 having the first end 64a of the energization path 64 or outputting an electric current from the rotating body 52. The second energization member 66B is for inputting an electric current to the first relative rotating body 56A having the second end 64b of the energization path 64 or for outputting an electric current from the first relative rotating body 56A. In the present embodiment, the first energization member 66A is an electric current input member that is used for inputting an electric current to the energization path 64, and the second energization member 66B is an electric current output member that is used for outputting an electric current from the energization path 64. In addition, the first energization member 66A may be used as an electric current output member, and the second energization member 66B may be used as an electric current input member. Each of the first energization member 66A and the second energization member 66B is electrically connected to the measurement unit 62 via a wiring member, a connector, or the like (not shown). The measurement unit 62 of the present embodiment is mounted on the circuit board 20. However, here, for convenience of description, the measurement unit 62 is shown as being provided at a position separated from the circuit board 20. In addition, the measurement unit 62 may be provided separately from the circuit board 20.

The first energization member 66A of the present embodiment is configured by a brush that slides on the rotating body 52. In a case where the first energization member 66A serves as an electric current input member, the first energization member 66A may be configured by a coil that induces an electric current in the rotating body 52. The same applies to a case where the second energization member 66B serves as an electric current input member. The first energization member 66A of the present embodiment is disposed on the counter load side with respect to the stator 26 of the motor 14. The first energization member 66A is disposed at a position overlapping the internal space of the motor casing 24 in the axial direction. The first energization member 66A may be directly or via another member fixed to the counter load-side casing 18. Both the first energization member 66A and the detection portion 54b of the first rotation sensor 54A may be supported by the counter load-side casing 18.

The second energization member 66B of the present embodiment is configured by an electrode that is fixed to the first relative rotating body 56A. The second energization member 66B of the present embodiment is fixed to the outer peripheral portion of the motor casing 24 that configures the first relative rotating body 56A. In addition, the second energization member 66B may be fixed to the counter load-side casing 18, the motor casing 24, or the like. The second energization member 66B of the present embodiment is disposed on the counter load side with respect to the stator 26 of the motor 14. It can be said that the second energization member 66B is disposed at the counter load-side portion of the first relative rotating body 56A.

The rotating body 52 (the high-speed rotating body) located on the stage before the reduction mechanism 32 of the speed reducer 16 is usually very faster in rotation speed than the contact units 60E and 60F (gear sets) configuring the reduction mechanism 32 and the first and second relative rotating bodies 56A and 56B. For this reason, the relative speed between the contact members adjacent to each other becomes very fast in the contact units 60A to 60C that are disposed between the rotating body 52 and the other member. As a result, the lubrication state in the contact units 60A to 60C is usually the mixed lubrication state or the hydrodynamic lubrication state, and the oil film thickness and the metal contact ratio $\alpha$ change over time. In contrast, the contact unit 60D (the main bearing) that is disposed between the first relative rotating body 56A and the second relative rotating body 56B, and the contact units 60E and 60F (gear sets) configuring the reduction mechanism 32 are usually very slower in the relative speed between the adjacent contact members than the contact units 60A to 60C. Therefore, the lubrication state in the contact units 60D to 60F is usually not substantially changed over time in the boundary lubrication state where the oil film thickness is zero.

In the present embodiment, it is tried to measure a change in the lubrication state of the contact unit 60A among the plurality of contact units 60A and 60D to 60F by using an electric current flowing through the energization path 64 (described later) passing through the plurality of contact units 60A and 60D to 60F. In this case, the influence of the contact units 60D to 60F in which the lubrication state is hardly changed on the electric current flowing through the energization path 64 is very small as compared to the influence of the contact unit 60A in which the lubrication state is changed. Therefore, in this case, the influence of the contact units 60D to 60F in which the lubrication state does not change can be ignored. In other words, the measurement unit 62 of the present embodiment measures only the lubrication state of the contact unit 60A disposed between the rotating body 52 functioning as the high-speed rotating body and the other member, among the contact units 60A and 60D to 60F on the energization path 64. The contact unit 60A serving as a measurement target to be measured by the measurement unit 62 is referred to as a measurement target unit 60H. The measurement target unit 60H of the present embodiment is the first contact unit 60A (the wave generator bearing 50). In this manner, the measurement target unit 60H of the present embodiment configures a part of the speed reducer 16. The measurement target unit 60H of the present embodiment is disposed on the load side with respect to the stator 26. The measurement unit 62 may compensate for a fluctuation in the electric current flowing through the energization path 64, which is caused by the contact units 60D to 60F in which the lubrication state hardly changes, by calibration.

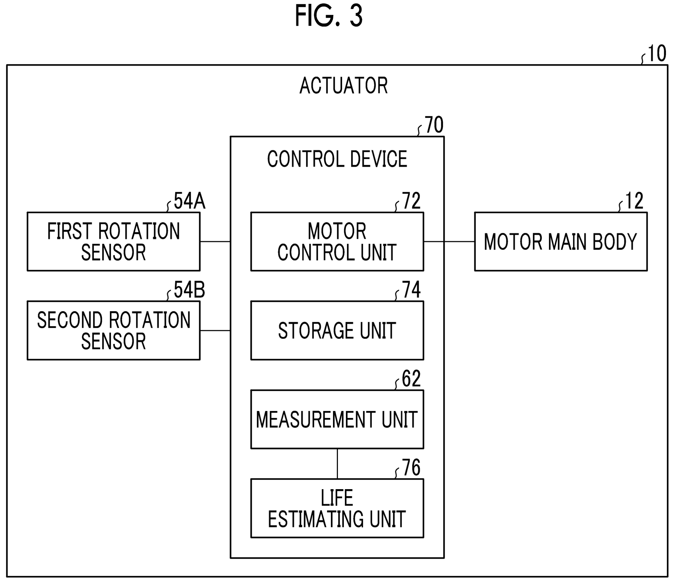

FIG. 3 is referred to. Each block is configured by a combination of a hardware element and a software element, or by any one of the hardware element and the software element. Each block may be realized in various aspects by the cooperation therebetween. Each block may be realized by a common hardware element or a separate hardware element, or by a common software element or a separate software element.

The actuator 10 includes, in addition to the first rotation sensor 54A described above, a second rotation sensor 54B that detects information about the rotation of the output member 42, and a control device 70 that controls the actuator 10. The second rotation sensor 54B is configured by a rotary encoder, a resolver, or the like.

The control device 70 includes, in addition to the measurement unit 62 described above, a motor control unit 72, a storage unit 74, and a life estimating unit 76 (described later). For example, a processor, a read only memory (ROM), and a random access memory (RAM) are used as the hardware elements of the control device 70. The hardware element of the control device 70 is configured by, for example, a processing chip that is mounted on the circuit board 20. For example, a program such as an operating system and an application is used as the software element of the control device 70. The storage unit 74 stores data that is used for processing by the control device 70.

The motor control unit 72 controls the operation of the motor 14. The motor control unit 72 controls the motor 14 such that, for example, a detection value relating to the rotation speed or the torque detected by the rotation sensors 54A and 54B approaches a command value that is sent from an external control device. The control content of the motor control unit 72 is an example, and is not limited thereto.

The measurement unit 62 measures a lubrication state between the plurality of contact members of the contact unit 60A (hereinafter, simply referred to as a lubrication state of the contact unit) by causing an electric current to flow through the energization path 64 described above, which passes through the contact unit 60A. In order to realize this, the measurement unit 62 may measure at least one parameter indicating the lubrication state of the contact unit 60A. The parameter is, for example, the oil film thickness of a lubricant, the metal contact ratio $\alpha$, or the like. An example in which the measurement unit 62 of the present embodiment adopts an electrical impedance method as a method for measuring the lubrication state of the contact unit 60A will be described. As described above, this is a method for measuring the oil film thickness and the metal contact ratio $\alpha$ at the same time by causing an alternating electric current to flow through the energization path 64 and measuring the magnitude Z (unit: $\Omega$) and the phase difference $\theta$ (unit: rad) of the complex impedance of the energization path. The measurement unit 62 is configured by using, for example, an LCR meter or the like capable of measuring these.

In measuring the lubrication state of the contact unit 60A, a relationship determined in advance, which is a relationship between a measurement value relating to an electric current flowing through the energization path 64 and the lubrication state of the contact unit 60A (hereinafter, also referred to as a measurement value-lubrication state relationship), is stored in the storage unit 74. The measurement value relating to an electric current as referred to herein is the magnitude Z and the phase difference θ of the complex impedance described above in the present embodiment. The relationship is stored in the form of a relational expression to be described later in the present embodiment, but is not limited thereto, and may be stored in the form of a data table or the like. The measurement unit 62 measures the lubrication state by calculating parameters (here, the oil film thickness and the metal contact ratio α) indicating the lubrication state of the contact unit 60A from the measurement value relating to the electric current flowing through the energization path 64 by using the relationship stored in the storage unit 74.

Next, an example of the relational expression indicating the measurement value-lubrication state relationship will be described. As the relational expression, various relational expressions including a known relational expression may be used. In a case where the lubrication state of the contact unit 60A made of a bearing is measured by using the electrical impedance method, the relational expression is specified by a plurality of Expressions (1) to (6) described below, for example.

[Expression 1]

$$\alpha = \frac{l \cdot R_{10} \cdot \cos\theta}{k \cdot n \cdot |Z|} \qquad \cdots \; (1)$$

[Expression 2]

$$h_1 = \frac{\delta}{W\left(\left(\frac{\delta}{\psi \cdot r_h}\right) \cdot exp\left(\psi - \frac{\zeta \cdot \sin\theta}{|Z|}\right)\right)} \qquad \cdots \; (2)$$

[Expression 3]

$$\delta = \frac{(1-\alpha) \cdot a \cdot b \cdot r_h}{2 \cdot r_x \cdot r_y} \qquad \cdots \; (3)$$

[Expression 4]

$$\psi = 1 - \sqrt{1 - \left(\frac{r_b}{r_y}\right)^2} \qquad \cdots \; (4)$$

[Expression 5]

$$\zeta = \frac{l \cdot r_h}{2\pi \cdot k \cdot n \cdot \varepsilon \cdot \omega \cdot r_y \cdot r_y} \qquad \cdots \; (5)$$

[Expression 6]

$$W(z') \cdot exp\big(W(z')\big) = z' \qquad \cdots \; (6)$$

The meanings of various symbols in Expression (1) are as follows. l (unit: dimensionless) indicates the number of contact areas per one rolling element. Since the rolling element 50a of the present embodiment forms a contact area with each of the outer ring 50b and the inner ring 50c, l **is** 2. $R_{10}$ (unit: Ω) indicates the electrical resistance of the contact area when the oil film is not present (when the metal contact ratio α is 1). k (unit: dimensionless) indicates the number of contact units 60A (bearings) that serve as measurement targets connected in parallel in the energization path **64.** In the present embodiment, since the number of contact units 60A that serve as measurement targets is two, k is 2. n (unit: dimensionless) indicates the number of rolling elements 50a that are used for the bearing.

The meanings of various symbols in Expression (2) are as follows. $h_1$ (unit: m) is an oil film thickness in the contact area of the contact unit 60A, and is one of the parameters to be measured in the present embodiment. δ (unit: m) can be represented by Expression (3). $\psi$ (unit: dimensionless) can be represented by Expression (4). $r_h$ (unit: m) is an average value of $r_x$ and $r_y$ to be described later. $\zeta$ (unit: Q) can be represented by Expression (5). W is a Lambert function, and is defined by Expression (6). z' in Expression (6) is an arbitrary complex number.

The meanings of various symbols in Expression (3) and the like are as follows. a (unit: m) is an average value of a major axis of a contact ellipse of each of contact areas (a contact area between the rolling element 50a and the outer ring 50b and a contact area between the rolling element 50a and the inner ring 50c) of the contact unit 60A in a case where each contact area is approximated to a contact ellipse. b (unit: m) is an average value of a minor axis of the contact ellipse of each contact area in a case where each contact area of the contact unit 60A is approximated to a contact ellipse. $r_x$ (unit: m) is an average value of an equivalent curvature radius between the rolling element 50a and the outer ring 50b and an equivalent curvature radius between the rolling element 50a and the inner ring 50c in the rolling direction of the rolling element 50a. $r_y$ (unit: m) is an average value of an equivalent curvature radius between the rolling element 50a and the outer ring 50b and an equivalent curvature radius between the rolling element 50a and the inner ring 50c in a direction perpendicular to the rolling direction of the rolling element 50a. $r_b$ (unit: m) is the radius of the rolling element 50a. These can be determined as known numbers based on the geometric conditions such as the shapes and positions of the rolling element 50a, the outer ring 50b, and the inner ring 50c of the contact unit 60A. $\varepsilon$ (unit: F/m) is the dielectric constant of the lubricant. $\omega$ (unit: rad/s) is a frequency of an alternating current voltage that is applied to the energization path 64, and is determined as a setting value (known number).

In a case where Expressions (1) to (6) are used, I, $R_{10}$, k, n, a, b, $r_x$, $r_y$, $r_h$, $r_b$, $\varepsilon$, and $\omega$ may be stored in the storage unit 74 as known numbers determined in advance, and may be used. The relationship between the measurement value relating to the electric current flowing through the energization path 64 and the lubrication state of the contact unit 60A can be specified by the geometric conditions of the contact unit 60A, the characteristic value (dielectric constant) of the lubricant, the setting value ($\omega$) relating to the electric current flowing through the energization path 64, and the like. As the measurement value relating to the electric current flowing through the energization path 64, measurement values of the magnitude Z and the phase difference $\theta$ of the complex impedance of the energization path 64 are used. By using these, the oil film thickness $h_1$ and the metal contact ratio $\alpha$ are calculated from Expressions (1) to (6), and the calculation values are used as the measurement results. The oil film thickness $h_1$ and the metal contact ratio $\alpha$ calculated here are average values of the oil film thickness and the metal contact ratio in all the contact areas of the first contact unit 60A (the wave generator bearing 50). In a case where a plurality of contact units 60A serving as measurement targets are connected in parallel in the energization path 64, the resistance value is an average value for the plurality of contact units 60A.

The effects of the actuator 10 described above will be described. The actuator 10 includes the measurement unit 62 that measures the lubrication state of the contact unit 60A by causing an electric current to flow through the energization path. Therefore, the lubrication state of the contact unit 60A can be identified by using the measurement result of the measurement unit 62.

The oil film thickness indicating the lubrication state of the contact unit 60A may depend on the torque acting on the contact unit 60A. For this reason, it is also possible to measure the torque by using the measurement value of the oil film thickness.

The first energization member 66A is disposed on the counter load side with respect to the stator 26 of the motor 14. On the counter load side with respect to the stator 26, it is easier to secure a space around the rotating body 52 than on the load side with respect to the stator 26. By disposing the first energization member 66A at such a location, the first energization member 66A can be provided in the actuator 10 without significantly changing the design of the existing actuator 10.

The contact unit 60A serving as a measurement target is disposed on the load side with respect to the stator 26. In this case, in a case where the first energization member 66A is disposed at a location around the contact unit 60A serving as a measurement target and the rotating body 52, it is difficult to secure a space at the location. Therefore, it is necessary to significantly change the design of the existing actuator 10. In this regard, according to the present embodiment, as described above, the first energization member 66A is disposed on the counter load side with respect to the stator 26 in which the space is easily secured. Therefore, even in a case where the contact unit 60A serving as a measurement target is disposed on the load side with respect to the stator 26, the first energization member 66A can be provided in the actuator 10 without significantly changing the design of the existing actuator 10.

The second energization member 66B is disposed on the counter load side with respect to the stator 26 of the motor 14. On the counter load side with respect to the stator 26, it is easier to secure a space around the first relative rotating body 56A than on the load side with respect to the stator 26. By disposing the second energization member 66B at such a location, the second energization member 66B can be provided in the actuator 10 without significantly changing the design of the existing actuator 10.

The contact unit 60A serving as a measurement target is a part of the speed reducer 16. In this way, the lubrication state of the contact unit 60A configuring a part of the speed reducer 16 can be identified by using the measurement result of the measurement unit 62.

Other features of the actuator 10 will be described. FIG. 2 is referred to. Hereinafter, the contact unit 60A serving as a measurement target for the lubrication state will be simply referred to as a measurement target unit 60H. The actuator 10 is provided with a parallel path 80 that is connected in parallel to the measurement target unit 60H on the energization path 64 in a case where it is assumed to be conductive. The parallel path 80 is configured by at least one actuator constituent member, and is connected in parallel with the measurement target units 60A and 60B between the first end-side path portion 64d and the second end-side path portion 64e. The expression "a case where it is assumed to be conductive" as referred to herein means a case where all the actuator constituent members located on the parallel path 80 are assumed to have conductivity. The parallel path 80 of the present embodiment is individually provided to correspond to each of the second contact unit 60B (the first rotating body bearing 58A) and the third contact unit 60C (the second rotating body bearing 58B), and passes through the contact location between the plurality of contact members of each of the corresponding contact units 60C and 60D.

The plurality of contact units 60A to 60F include non-measurement target units 60I that are provided on the parallel paths 80. The non-measurement target unit 60I is not a measurement target for the lubrication state by the measurement unit 62. The non-measurement target unit 60I of the present embodiment is configured by each of the second contact unit 60B and the third contact unit 60C.

The actuator 10 includes an insulating material 82 that blocks the flow of an electric current through the parallel path 80 on the energization path 64. The insulating material 82 is individually provided to correspond to each of the parallel paths 80. In this way, when the electric current flows through the energization path 64 passing through the measurement target unit 60H, the electric current can be made not to flow through the non-measurement target unit 60I due to the insulating material 82. Therefore, in measuring the lubrication state of the measurement target unit 60H by measuring a response of an electric current passing through the measurement target unit 60H, it is possible to prevent the occurrence of erroneous measurement caused by the electric current passing through the non-measurement target unit 60I.

The insulating material 82 of the present embodiment is configured by at least a part of the non-measurement target unit 60I. Specifically, the outer rings of the first and second rotating body bearings 58A and 58B configuring the non-measurement target units 60I of the present embodiment are configured by ceramics, a resin-based material, or the like, which has electrical insulation properties. The portion of the material having electrical insulation properties configures the insulating material 82. Here, an example in which the outer ring has electrical insulation properties has been described. However, at least one or all of the rolling element, the outer ring, and the inner ring may be configured by a material having insulation properties. It can also be said that a part or the entirety of the non-measurement target unit 60I may be configured by the insulating material 82. In this way, the configuration can be simplified more than in a case of providing the insulating material 82 separately from the non-measurement target unit 60I.

In a case where the bearing such as the wave generator bearing 50 serves as the measurement target unit 60H, in order to measure the lubrication states at the contact location between the outer ring 50b and the rolling element 50a and the contact location between the rolling element 50a and the inner ring 50c, it is necessary to provide the energization path 64 so as to pass through both of the two contact locations. Therefore, it is necessary to avoid a situation where an electric current flows to another location via a location between the rolling element 50a and the retainer 50d without passing through both of the two contact locations. In order to realize this, in the present embodiment, the retainer 50d of the wave generator bearing 50 is configured by a material having electrical insulation properties.

FIG. 3 is referred to. The lubrication state of the contact unit 60A affects the life of the actuator 10. In particular, the lubrication state of the wave generator bearing 50 that is used in the bending meshing-type speed reducer has a very large influence on the life of the actuator 10. This is because a large load is applied to the wave generator bearing 50 and the lubrication state is under severe conditions due to the high-speed rotation of the rotating body 52. The same applies to an eccentric bearing that is used in the eccentric oscillation type speed reducer. The eccentric bearing is disposed between an eccentric portion of a crankshaft and an oscillating gear that oscillates by the eccentric portion. Hereinafter, an example of a method for predicting the life of the actuator 10 will be described using the measurement values of the parameters indicating the lubrication state of the contact unit 60A including such a wave generator bearing 50.

The life estimating unit 76 predicts the life of the actuator 10, based on the lubrication state of the contact unit 60A (in the present embodiment, the wave generator bearing 50) measured by the measurement unit 62. In predicting the life of the actuator 10, a relationship determined in advance, which is a relationship between the lubrication state of the contact unit 60A and the life of the actuator 10 (hereinafter, also referred to as a lubrication state-life relationship), is stored in the storage unit 74. The relationship is stored in the form of a relational expression in the present embodiment, but is not limited thereto, and may be stored in the form of a data table or the like. The life estimating unit 76 predicts the life of the actuator 10 by calculating the life of the actuator 10 from the measurement values of the parameters indicating the lubrication state of the contact unit 60A by using the relationship stored in the storage unit 74.

A frequency of predicting the life of the actuator 10 by the life estimating unit 76 is not particularly limited. For example, the life estimating unit 76 may predict the life of the actuator 10 singularly in response to a command sent from the external control device. In addition, the life estimating unit 76 may predict the life of the actuator 10 at a time interval determined in advance. In this way, even in a case where the behavior of the actuator 10 changes over time and has an influence on the life, the life of the latest actuator 10 can be predicted in consideration of the influence. In addition, the life estimating unit 76 may sequentially predict the life of the actuator 10 during the operation of the actuator 10, thereby monitoring the sequentially obtained prediction value during the operation of the actuator 10. In addition, the life estimating unit 76 may calculate the remaining time from the present time until the end of the life, based on the predicted life of the actuator 10, and display the remaining time on an indicator (not shown) such as a display.

Next, an example of the relational expression showing the lubrication state-life relationship will be described. As the relational expression, various relational expressions including a known relational expression may be used. This relational expression is specified by, for example, a plurality of expressions (7) to (12) described below.

[Expression 7]

$$L_{10} = L_1 \left(\frac{T_{OE}}{T_E}\right)^{10/3} \cdot \frac{n_{rated}}{n_{EI}} \qquad \cdots \quad (7)$$

[Expression 8]

$$T_E = \sqrt[10/3]{\frac{\int_0^{t_{total}} \frac{1}{a_{ISO}(t)} \cdot n(t) \cdot T^{10/3}(t) \cdot dt}{\int_0^{t_{total}} n(t) \cdot dt}} \qquad \cdots \quad (8)$$

[Expression 9]

$$a_{ISO}(t) = f\left(\frac{e_c \cdot C_u}{P}, \kappa(t)\right) \qquad \cdots \quad (9)$$

[Expression 10]

$$P = \frac{T(t) \cdot C_r}{T_{OE}} \qquad \cdots \quad (10)$$

[Expression 11]

$$\kappa(t) \approx \Lambda^{1.3} \qquad \cdots \quad (11)$$

[Expression 12]

$$\Lambda = \frac{h_0(t)}{\sqrt{R_1^2 + R_2^2}} \qquad \cdots \quad (12)$$

The meanings of various symbols in Expression (7) are as follows. $L_{10}$ (unit: time) indicates a basic rated life indicating the life of the actuator 10. $L_1$ (unit: time) is a rated life time determined in advance in accordance with the type of the actuator 10, and is, for example, a value such as 7,000 or 10,000. $T_{OE}$ (unit: N·m) is a rated torque, which is a rated value of the torque that is output from the output member 42 of the actuator 10. $n_{rated}$ (unit: rpm) is a rated rotation speed which is a rated value of the rotation speed that is output from the output member 42 of the actuator 10. Both the rated torque $T_{OE}$ and the rated rotation speed $n_{rated}$ are determined in advance in accordance with the type of the actuator 10.

$n_{EI}$ (unit: rpm) is an average input rotation speed, which is a time average of the rotation speed of the motor shaft 22 of the actuator 10 when the actuator 10 is operated in a specific operation pattern. This operation pattern is designated by, for example, an external control device. The motor control unit 72 controls the motor 14 such that the actuator is operated by a cycle operation in which the operation pattern is repeated. The average input rotation speed $n_{EI}$ is determined according to an operation pattern that is used for the actuator 10 in this manner.

$T_E$ (unit: N·m) of Expression (7) is an equivalent torque that is a torque acting on the output member 42 when the actuator 10 is operated in a specific operation pattern. It is known that the equivalent torque $T_E$ is obtained from Expression (8), for example.

The meanings of various symbols in Expression (8) are as follows. Each of T(t) and n(t) is the torque and the rotation speed of the output member 42 at an arbitrary time point t. $a_{ISO}(t)$ is a life correction coefficient at an arbitrary time point t. The life correction coefficient $a_{ISO}$ is a coefficient for reflecting the influence of various elements on the basic rated life. The various elements as referred to herein are a contamination coefficient $e_c$ (unitless) for reflecting the influence of the contamination of the lubricant, a fatigue limit load $C_u$ (unit: N) which is a load acting on the wave generator bearing 50 when a fatigue limit stress is applied to the maximum load contact portion on the raceway surface of the wave generator bearing 50, and a viscosity ratio $\kappa(t)$ of the lubricant at an arbitrary time point t. The life correction coefficient $a_{ISO}$ is also defined in ISO 281:2007, JIS B1518, and the like, and it is known that the life correction coefficient $a_{ISO}$ can be expressed by functions of various elements as in Expression (9). The contamination coefficient $e_c$ and the fatigue limit load $C_u$ may be calculated in accordance with the contents described in the above-described ISO 281, JIS B1518, and the like, and are determined in advance. P in Expression (9) is a dynamic equivalent load (unit: N) of the wave generator bearing 50, and it is known that it can be expressed by Expression (10) by using T(t) and $T_{OE}$ described above. $C_r$ in Expression (10) is a dynamic radial load rating (unit: N) of the wave generator bearing 50, and is determined in advance.

A viscosity ratio $\kappa(t)$ of the lubricant can be estimated by Expression (11) by using, for example, an oil film parameter A (unitless) as in ISO 281:2007 and JIS B1518. It is known that the oil film parameter A is obtained by, for example, Expression (12). $h_0$ in Expression (12) is the oil film thickness (unit: μm) of the lubricant at an arbitrary time point t, and $R_1$ and $R_2$ are the surface roughness (unit: μm) of the contact members. For example, in a case where the oil film parameter $\Lambda$ of the wave generator bearing 50 is obtained, $R_1$ and $R_2$ are used as known numbers of the measurement values of the surface roughness of the rolling element 50a and the outer ring 50b, or are used as known numbers of the measurement values of the surface roughness of the rolling element 50a and the inner ring 50c.

In using Expressions (7) to (12) described above, for each of the torque T(t) and n(t) at arbitrary time point t in Expression (8) and the like, the detection value of each of the torque and the rotation speed of the output member 42 sequentially detected by the rotation sensor 54B is used. For the viscosity ratio $\kappa(t)$ of the lubricant in Expression (9), the measurement value of the oil film thickness of the contact unit 60A measured by the measurement unit 62 at an arbitrary time point t is used. In addition, a known number stored in advance in the storage unit 74 is used. By calculating the basic rated life $L_{10}$ by using these expressions, the life of the actuator 10 reflecting the measurement value of the oil film thickness of the contact unit 60A is estimated.

As described above, the actuator 10 includes the life estimating unit 76 that predicts the life of the actuator 10, based on the measured lubrication state of the contact unit 60A. Therefore, the life of the actuator 10 can be predicted in consideration of the lubrication state of the contact unit 60A. By predicting the life of the actuator 10, it is possible to identify the timing of maintenance, replacement, or the like of the actuator 10. In this way, this can be used for predictive maintenance of the actuator 10, and is advantageous in minimizing the downtime of the actuator 10.

When focusing on $n_{EI}$ in Expression (7), it can be said that the lubrication state-life relationship stored in the storage unit 74 is specified by at least the operation pattern of the actuator 10. It can be said that the life estimating unit 76 predicts the life of the actuator 10 based on the lubrication state-life relationship specified by such an operation pattern. Therefore, it is possible to predict the life of the actuator 10 under a specific operation pattern while considering the lubrication state of the contact unit 60A.

Next, modification forms of each component described so far will be described.

The specific positions of the plurality of energization members 66A and 66B are not particularly limited as long as the energization path 64 passing through the contact unit serving as a measurement target is formed. For example, the first energization member 66A may be disposed on the load side with respect to the stator 26, or may be disposed at a position overlapping the stator 26 in the radial direction. For example, the second energization member 66B may be disposed on the load side with respect to the stator 26, or may be disposed at a position overlapping the stator 26 in the radial direction.

A specific example of the contact unit (the measurement target unit 60H) serving as a measurement target to be measured by the measurement unit 62 is not limited to the wave generator bearing 50, and may be various contact units that are used for the actuator 10. The measurement target unit 60H may be, for example, a gear set. In this manner, when the measurement target unit 60H is set to be a gear set, the specific example of the speed reducer 16 is not particularly limited. The speed reducer 16 may be, for example, an eccentric oscillation type speed reducer (including a center crank type and a distribution type) or a bending meshing-type speed reducer (including a tubular type, a silk hat type, and a cup type), or may be a simple planetary speed reducer, a right angle shaft speed reducer, a parallel shaft speed reducer, or the like. In addition, the reduction mechanism of the speed reducer 16 is not limited to a gear mechanism, and may be a friction transmission mechanism or the like. In this case, the measurement target unit 60H may be a friction transmission set including a plurality of friction transmission members (contact members) that transmit power by friction transmission. In addition, the measurement target unit 60H may be an eccentric bearing of an eccentric oscillation type speed reducer. The eccentric bearing as referred to herein is, for example, the eccentric bearing described in Japanese Unexamined Patent Publication No. 2022-79015. In this case, as described above, there is an advantage similar to that in a case where the wave generator bearing 50 is the measurement target unit 60H in that the lubrication state of the eccentric bearing having a very large influence on the life of the actuator 10 can be identified. The measurement target unit 60H may be disposed on the counter load side with respect to the stator 26.

In a case where various contact units are set as measurements target, the energization path 64 passing through the contact unit serving as a measurement target may be formed by changing the positions of the plurality of energization members 66A and 66B according to the position of the contact unit serving as a measurement target. In the present embodiment, an example has been described in which other contact units are also present on the energization path 64 passing through the contact unit serving as a measurement target. In addition, other contact units do not need to be present on the energization path 64 passing through the contact unit serving as the measurement target. In addition, a plurality of measurement target units 60H connected in series may be present on the energization path 64. The measurement target unit 60H does not need to configure a part of the speed reducer 16. For example, the measurement target unit 60H may configure a part of the motor 14.

So far, an example has been described in which the measurement unit 62 measures the lubrication state of the contact unit by causing an alternating electric current to flow through the energization path 64 passing through the contact unit by using the electrical impedance method. A method for measuring the lubrication state of the contact unit by the measurement unit 62 is not particularly limited. As this method, for example, an electrical resistance method, an electrostatic capacitance method, or the like may be used. In a case where the electrical resistance method is used, a weak direct electric current is caused to flow through the energization path by applying a direct current voltage by the measurement unit 62, the electric resistance value of the contact unit is measured from the direct electric current, and the oil film thickness can be measured from the electric resistance value. In a case where the electrostatic capacitance method is used, an alternating electric current is caused to flow through the energization path by applying an alternating current voltage by the measurement unit 62, the electrostatic capacitance is measured from the alternating electric current, and the oil film thickness can be measured from a measurement value of the electrostatic capacitance. In this manner, in measuring the lubrication state of the contact unit by the measurement unit 62, the electric current flowing through the energization path 64 passing through the contact unit may be either an alternating electric current or a direct electric current.

In the embodiment, the measurement value-lubrication state relationship in a case where the contact unit is a bearing has been described. Even in a case where the contact unit is a gear set other than the bearing, similarly, the above-described measurement value-lubrication state relationship according to the contact unit may be determined in advance. This relationship may be specified by at least one of the geometric relationship of the contact unit, the characteristic value of the lubricant, and the setting value relating to the electric current flowing through the energization path, as in the above-described relational expression. In determining this, an appropriate relationship between the measurement value and the lubrication state according to the contact unit can be determined through experiments, analyses, or the like by those skilled in the art.

The actuator 10 does not need to include the insulating material 82. The insulating material 82 does not need to be configured by the non-measurement target unit 60I, and may be provided separately from the non-measurement target unit 60I. For example, at least a part of the actuator constituent member on the parallel path 80 described above may be configured by the insulating material 82. In this case, a part of the actuator constituent member in which the non-measurement target unit 60I is disposed may be configured by an insulating material.

The lubrication state that is used in predicting the life of the actuator 10 by the life estimating unit 76 is not limited to the lubrication state of the wave generator bearing 50. The lubrication state may be the lubrication state of the eccentric bearing described above, or may be the lubrication state of the other contact unit.

A specific example of the parameter indicating the lubrication state of the contact unit, which is used in predicting the life of the actuator 10, is not limited to the oil film thickness. For example, a phase angle $\theta$ of the impedance described above may be used as the parameter. The phase angle $\theta$ has a correlation with the viscosity ratio $\kappa(t)$ in Expression (9). For example, the phase angle $\alpha$ has a maximum value when the lubrication state is the hydrodynamic lubrication state. In addition, when the lubrication state transitions to the mixed lubrication state or the boundary lubrication state and the lubrication state deteriorates, the phase angle $\theta$ approaches zero from the maximum value. The viscosity ratio $\kappa(t)$ is also larger than 1 when the lubrication state is the hydrodynamic lubrication state, and becomes smaller in the range of less than 1 as the lubrication state deteriorates. That is, when the phase angle $\alpha$ has the maximum value, the viscosity ratio $\kappa(t)$ is larger than 1, and the viscosity ratio $\kappa(t)$ becomes small as the phase angle $\alpha$ approaches zero from the maximum value. By using this, the relationship between the phase angle $\theta$ and the viscosity ratio $\kappa(t)$ may be stored in the storage unit 74 in advance in the form of a relational expression or the like, and the viscosity ratio $\kappa(t)$ may be calculated from the relationship and the measurement value of the phase angle $\theta$, and the calculation value may be used in Expression (9).

The contents of each component described in the above-described embodiments and the like are merely examples. The technical idea abstracted from these contents should not be interpreted in a limited manner in the contents of the present specification. The contents of each component described in the embodiments or the like can be changed, added, deleted, or the like, and many changes in design can be made. The description is emphasized by adding the notation of "the present embodiment" and "the embodiment" to the contents in which such a change in design can be made. However, design changes are allowed even in a content in which there is no such notation. Any combination of the components described above is also effective. For example, any description item of another embodiment may be combined with an embodiment, or any description item of an embodiment and another modification form may be combined with a modification form. Structures and numerical values as mentioned in the embodiments and modification forms naturally include those that can be regarded as the same when manufacturing errors and the like are taken into consideration. The components configured by a singular member in the description in the present specification may be configured by a plurality of members. Similarly, the component configured by a plurality of members may be configured by a single member.

Brief Description of the Reference Symbols

| | |
|---|---|
| 10: | actuator |
| 14: | motor |
| 16: | speed reducer |
| 26: | stator |
| 28: | rotor |
| 52: | rotating body |
| 56A, 56B: | relative rotating bodies |
| 60A to 60F: | contact unit |
| 60H: | measurement target unit |
| 62: | measurement unit |
| 64: | energization path |
| 66A: | first energization member |
| 66B: | second energization member |
| 76: | life estimating unit |

**Claims**

1. An actuator (10) that includes a motor (14) and a speed reducer (16), the actuator (10) comprising:

   a contact unit (60A to 60F) including a plurality of contact members, in which during an operation of the actuator (10), the contact members adjacent to each other come into contact with each other with relative movement;
   a plurality of energization members (66A, 66B) provided separately from the contact unit (60A to 60F) and configured to cause an electric current to flow through an energization path (64) configured to include a plurality of actuator constituent members via a contact location between the plurality of contact members; and
   a measurement unit (62) configured to measure a lubrication state between the plurality of contact members in the contact unit (60A to 60F) by causing the electric current to flow through the energization path (64).

2. The actuator (10) according to claim 1, further comprising:

   a rotating body (52) that is rotated by a stator (26) and a rotor (28) of the motor (14),
   wherein the plurality of energization members (66A, 66B) include a first energization member (66A) for inputting the electric current to the rotating body (52) or outputting the electric current from the rotating body (52), and
   the first energization member (66A) is disposed on a counter load side with respect to the stator (26).

3. The actuator (10) according to claim 2, wherein the contact unit (60A) serving as a measurement target to be measured by the measurement unit (62) is disposed on a load side with respect to the stator (26).

4. The actuator (10) according to claim 3, further comprising:

   a relative rotating body (56A, 56B) that rotates relative to the rotating body (52),
   wherein the plurality of energization members (66A, 66B) include a second energization member (66B) for inputting the electric current to the relative rotating body (56A, 56B) or outputting the electric current from the relative rotating body (56A, 56B).

5. The actuator (10) according to claim 4, wherein the second energization member (66B) is disposed on a counter load side with respect to the stator (26).

6. The actuator (10) according to claim 1,

   wherein the contact unit (60A to 60F) includes a measurement target unit (60H) that is provided on the energization path (64) and that serves as a measurement target to be measured by the measurement unit(62), and a non-measurement target unit (60I) that is provided on a parallel path (80) that is connected in parallel with the measurement target unit (60H) on the energization path (64) in a case where it is assumed that the actuator constituent member is conductive, and
   the actuator (10) further comprises an insulating material (82) that blocks a flow of an electric current passing through the parallel path (80) on the energization path (64).

7. The actuator (10) according to claim 6, wherein the insulating material (82) is configured by at least a part of the non-measurement target unit (60I).

8. The actuator (10) according to claim 1, wherein the contact unit (60A) serving as a measurement target to be measured by the measurement unit (62) is a gear set or a bearing.

9. The actuator (10) according to claim 1, wherein the contact unit (60A) serving as a measurement target to be measured by the measurement unit (62) constitutes a part of the speed reducer (16).

10. The actuator (10) according to claim 1, further comprising:
    a life estimating unit (76) that predicts a life of the actuator (10), based on the lubrication state measured by the measurement unit (62).

FIG. 1

FIG. 2

# FIG. 3

Europäisches
Patentamt
European
Patent Office
Office européen
des brevets

# EUROPEAN SEARCH REPORT

**Application Number**

EP 25 20 9749

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 299 159 A2 (MOVENTAS OY [FI]) 23 March 2011 (2011-03-23) | 1,8,9 | INV. H02K11/21 |
| Y | * paragraphs [0007], [0021], [0022]; figures 1, 2 * | 2-7,10 | H02K11/30 H02K7/08 |
| | ----- | | H02K7/116 |
| Y | WO 2024/106085 A1 (SUMITOMO HEAVY INDUSTRIES [JP]) 23 May 2024 (2024-05-23) * figure 1 * | 2-7 | H02K5/173 H02K11/20 |
| | ----- | | |
| A | EP 3 913 245 A1 (NSK LTD [JP]) 24 November 2021 (2021-11-24) * paragraphs [0050], [0051]; figure 4 * | 2 | |
| | ----- | | |
| Y | US 2006/232267 A1 (HALALAY ION C [US] ET AL) 19 October 2006 (2006-10-19) * claim 1; figure 7 * | 10 | |
| | ----- | | |

| | | | TECHNICAL FIELDS SEARCHED (IPC) |
|---|---|---|---|
| | | | H02K |

The present search report has been drawn up for all claims

| Place of search | Date of completion of the search | Examiner |
|---|---|---|
| The Hague | 20 March 2026 | Afinowi, Ibrahim |

EPO FORM 1503 03.82 (P04C01)

## ANNEX TO THE EUROPEAN SEARCH REPORT
## ON EUROPEAN PATENT APPLICATION NO.

EP 25 20 9749

This annex lists the patent family members relating to the patent documents cited in  the above-mentioned European search report.
The members are as contained in the European Patent Office EDP file on
The European Patent Office is in no way liable for these particulars which are merely given for the purpose of information.

20-03-2026

| Patent document cited in search report | | Publication date | Patent family member(s) | | Publication date |
|---|---|---|---|---|---|
| EP 2299159 | A2 | 23-03-2011 | EP | 2299159 A2 | 23-03-2011 |
| | | | FI | 20095916 A7 | 08-03-2011 |
| WO 2024106085 | A1 | 23-05-2024 | CN | 120188375 A | 20-06-2025 |
| | | | EP | 4622072 A1 | 24-09-2025 |
| | | | JP | 2024071796 A | 27-05-2024 |
| | | | US | 2025253737 A1 | 07-08-2025 |
| | | | WO | 2024106085 A1 | 23-05-2024 |
| EP 3913245 | A1 | 24-11-2021 | BR | 112021013700 A2 | 21-09-2021 |
| | | | CN | 113302411 A | 24-08-2021 |
| | | | EP | 3913245 A1 | 24-11-2021 |
| | | | JP | 7099551 B2 | 12-07-2022 |
| | | | JP | WO2020149233 A1 | 25-11-2021 |
| | | | KR | 20210099121 A | 11-08-2021 |
| | | | US | 2022074813 A1 | 10-03-2022 |
| | | | WO | 2020149233 A1 | 23-07-2020 |
| US 2006232267 | A1 | 19-10-2006 | CN | 101512353 A | 19-08-2009 |
| | | | DE | 112006000894 T5 | 05-06-2008 |
| | | | KR | 20080007239 A | 17-01-2008 |
| | | | US | 2006232267 A1 | 19-10-2006 |
| | | | WO | 2006113012 A2 | 26-10-2006 |

EPO FORM P0459

For more details about this annex : see Official Journal of the European Patent Office, No. 12/82

## REFERENCES CITED IN THE DESCRIPTION

**Patent documents cited in the description**

- JP 2022142033 A

- JP 2022079015 A